# FASCICULE DE BREVET EUROPEEN

(11) **EP 1 944 179 B1**
(45) Date de publication et mention de la délivrance du brevet: **16.09.2009**
(21) Numéro de dépôt: 07291500.2
(22) Date de dépôt: 12.12.2007
(51) Int. Cl.: B60J 1/20

(54) **Panneau de porte, et porte d'automobile munie d'un pare-soleil**
Türinnenpaneel und Kraftfahrzeugtür ausgestattet mit einer Sonnenblende
Door panel and automotive door equipped with a sunshade

(30) Priorité: 15.01.2007 FR 0700258
(43) Date de publication de la demande: 16.07.2008
(73) Titulaire: Faurecia Interieur Industrie, 92000 Nanterre (FR)
(72) Inventeur: Tomas-Preus, Alex, 46930 Quart de Poblet Valencia (ES)
(74) Mandataire: Domenego, Bertrand

(56) Documents cités:
- EP-A1- 1 302 347
- FR-A- 2 873 957
- FR-A1- 2 774 947
- FR-A1- 2 882 696

## Description

La présente invention concerne des panneaux de portes d'automobile munis de pare-soleil, et des portes comprenant de tels panneaux.

Il est de plus en plus fréquent que les portes arrière des automobiles soient munies de pare-soleil.

On connaît déjà des pare-soleil livrés dans une cassette qui contient des supports de paliers du rouleau de store du pare-soleil. La cassette est montée dans un panneau de porte, dans un logement qui soit peut contenir un tel pare-soleil, soit peut rester vide. Ce logement est délimité entre l'organe porteur de la porte et son bandeau supérieur.

Cette réalisation présente l'avantage de ne pas nécessiter de modification de construction selon que la porte est munie d'un pare-soleil ou non. Cependant, son inconvénient est son coût élevé puisque la cassette doit remplir toutes les fonctions du pare-soleil, en particulier celles des supports de paliers du rouleau de store, de la protection du store enroulé, et du guidage du store à sa sortie de la cassette.

Le document EP-1 302 347 décrit la réalisation d'une poutre de renfort de porte qui délimite un emplacement pour un store, la poutre supportant les paliers du store. Cette réalisation nécessite une pièce distincte de l'organe porteur et du bandeau pour le support du rouleau de store. Etant donné l'intégration du rouleau de store dans la poutre, la store doit être intégré à la poutre avant d'être livré au fabricant de portes. Cette solution présente donc le même inconvénient que la précédente, et, en conséquence, le prix de la poutre est élevé.

Le document FR 2 882 696 décrit un panneau de porte d'automobile selon le préambule de la revendication 1.

Étant donné que la proportion des automobiles dont les portes arrière sont munies d'un pare-soleil devient de plus en plus importante, puisque les pare-soleil sont souvent livrés en série, il est nécessaire d'an réduire le coût.

Selon l'invention, par rapport à la technique antérieure, le coût du pare-soleil est réduit parce que les fonctions de support des paliers du rouleau de store, de protection du store enroulé, et de guidage du store sont remplies par des organes déjà présents dans la porte. Ainsi, selon l'invention, les éléments de pare-soleil qui sont intégrés à la porte comprennent uniquement le rouleau d'enroulement du store, monté sur des paliers, les autres fonctions de support, de protection et de guidage étant remplies par l'organe porteur et/ou le bandeau.

Plus précisément, l'invention concerne un panneau de porte d'automobile, muni d'un pare-soleil ayant un store enroulé autour d'un axe d'un rouleau coopérant avec des paliers à ses deux extrémités, le panneau de porte étant du type qui comprend deux éléments principaux de support, constitués par un organe porteur et un bandeau ; caractérisé en ce que les éléments principaux portent deux supports intégrés destinés à supporter les paliers du rouleau de pare-soleil, et l'un des supports intégrés au moins forme un logement qui ouvre dans une direction transversale à l'axe du rouleau.

D'autres caractéristiques de l'invention sont décrites dans les revendications dépendantes.

De préférence, les deux supports intégrés destinés à supporter les paliers du rouleau de pare-soleil sont disposés sur le même élément principal.

Dans un exemple de réalisation, les deux supports intégrés de paliers sont disposés sur l'organe porteur, et le bandeau ferme l'espace logeant le rouleau de pare-soleil. De préférence, le store de pare-soleil passe alors entre l'organe porteur et le bandeau.

Dans un autre exemple de réalisation, les deux supports intégrés de paliers sont disposés sur le bandeau, et un couvercle ferme l'espace logeant le rouleau de pare-soleil. De préférence, le store de pare-soleil passe entre le bandeau et le couvercle. Par exemple, le bandeau est fixé à l'organe porteur par des vis.

Dans un mode de réalisation, l'un des supports intégrés de paliers forme un logement ouvrant dans une direction disposée pratiquement dans le plan de la porte, et l'autre des supports intégrés forme un logement ouvrant en direction sensiblement perpendiculaire au plan de la porte.

Dans un autre mode de réalisation, les deux supports intégrés de paliers forment des logements ouvrant dans des directions disposées pratiquement dans le plan de la porte, les deux directions étant sensiblement perpendiculaires l'une à l'autre.

Dans un autre mode de réalisation, les deux supports intégrés de paliers forment des logements ouvrant en directions sensiblement perpendiculaires à la porte.

L'invention concerne aussi une porte d'automobile, comprenant un ouvrant structurel monté sur un dormant structurel intégré à la structure de l'automobile, l'ouvrant étant destiné à tourner par rapport au dormant et comprenant une partie inférieure de porte ou caisson intégrant des dispositifs fonctionnels de la porte, et un panneau de porte rapporté à l'intérieur de la partie inférieure de porte ; selon l'invention, le panneau de porte est un panneau selon la revendication 1.

Les dispositifs fonctionnels sont par exemple une serrure et un lève-vitre.

L'avantage de cette disposition selon l'invention est que des modifications très réduites de l'organe porteur et/ou du bandeau permettent la suppression pure et simple d'organes complexes et coûteux nécessaires selon la technique antérieure. Un autre avantage est que la suppression d'un organe formant boîtier de cassette permet une meilleure intégration des fonctions de support, de protection et de guidage du pare-soleil aux autres fonctions de la porte (mécanisme lève-vitres, mécanisme d'ouverture de porte, etc.).

D'autres caractéristiques et avantages de l'invention seront mieux compris à la lecture de la description qui va suivre d'exemples de réalisation faite en référence aux dessins annexés sur lesquels :
la figure 1 est une vue en élévation d'un panneau de porte arrière d'automobile, représentant les principaux éléments d'une porte ;
la figure 2 est une vue éclatée des éléments du panneau de porte représenté sur la figure 1 lorsque son bandeau est utilisé pour le support d'un pare-soleil ;
les figures 3 et 4 sont des coupes transversales de parties supérieures du panneau de porte, dans deux directions opposées ;
la figure 5 est une vue en élévation latérale d'un bandeau de panneau de porte muni d'un pare-soleil selon l'invention ;
les figures 6 et 7 représentent sous forme agrandie deux parties VI et VII de la figure 5, aux extrémités du rouleau de store ; et
les figures 8 à 11 illustrent diverses étapes de réalisation d'un panneau de porte selon l'invention.

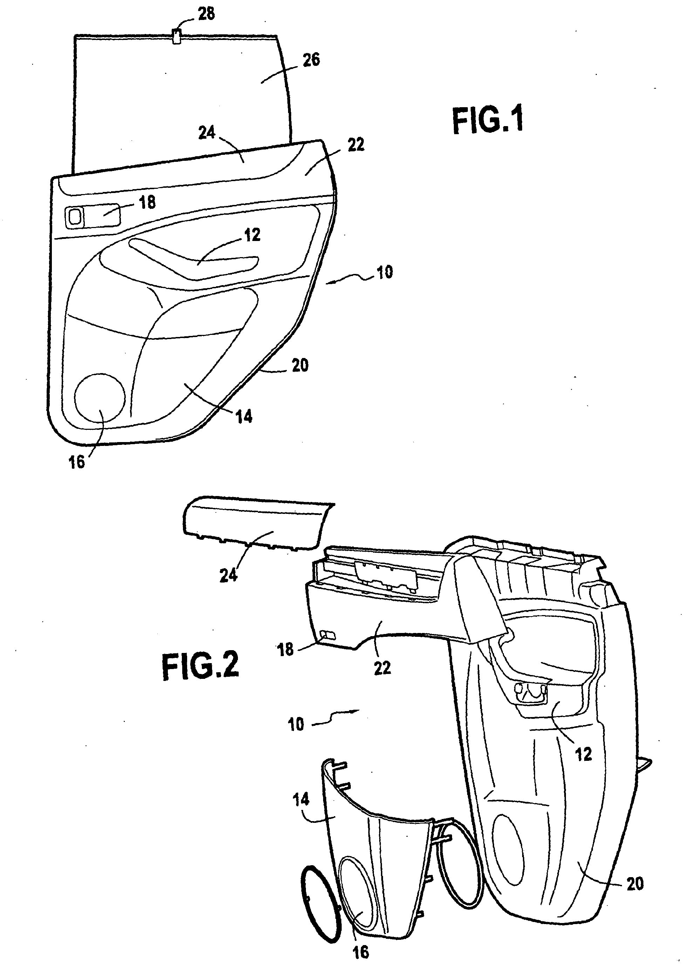

La figure 1 est une vue en élévation latérale d'un panneau de porte arrière d'automobile, réalisé selon l'invention. Le panneau de porte 10 comporte divers accessoires tels qu'un accoudoir 12, une poche 14 pour cartes, une grille 16 de haut-parleur, une poignée 18 de déblocage, etc. Ces éléments sont portés par deux éléments principaux de panneau de porte, d'une part un organe porteur 20 (mieux représenté sur la figure 2) et d'autre part un bandeau 22. La porte elle-même, qui constitue un "ouvrant structurel" monté afin qu'il pivote sur un "dormant structurel" de la structure de l'automobile, comporte, en plus du panneau de porte, une partie extérieure dont la partie inférieure délimite un caisson avec le panneau de porte.

Le bandeau 22 porte un couvercle 24 qui ferme une cavité intérieure du bandeau. Le bandeau 22, qui contient un pare-soleil, laisse sortir le store 26 qui peut être manoeuvré à l'aide d'une poignée 28 placée au centre d'une barre de tenue du bord d'extrémité du store.

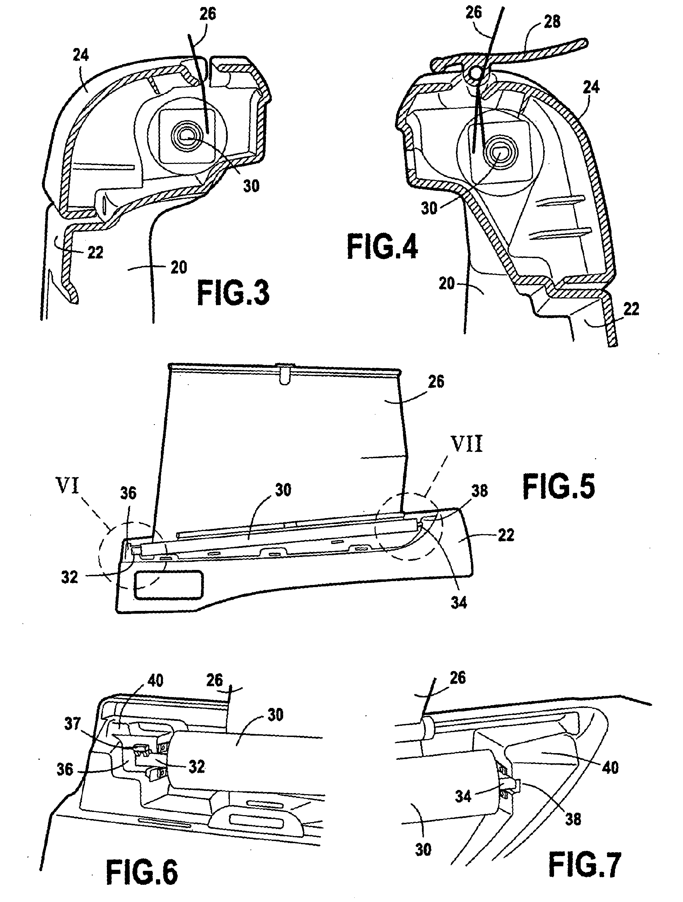

On se réfère maintenant aux figures 3 à 7 qui représentent un mode de réalisation de l'invention dans lequel le pare-soleil est monté sur le bandeau 22.

Le pare-soleil proprement dit comprend un rouleau 30 d'enroulement du store 26, qui est monté, à ses extrémités, dans des paliers 32 et 34. Ces paliers sont destinés à se loger respectivement dans des supports de paliers 36 et 38.

Les figures 3 et 4 indiquent que le store 26 déroulé du rouleau 30 passe entre le bandeau 22 et le couvercle 24.

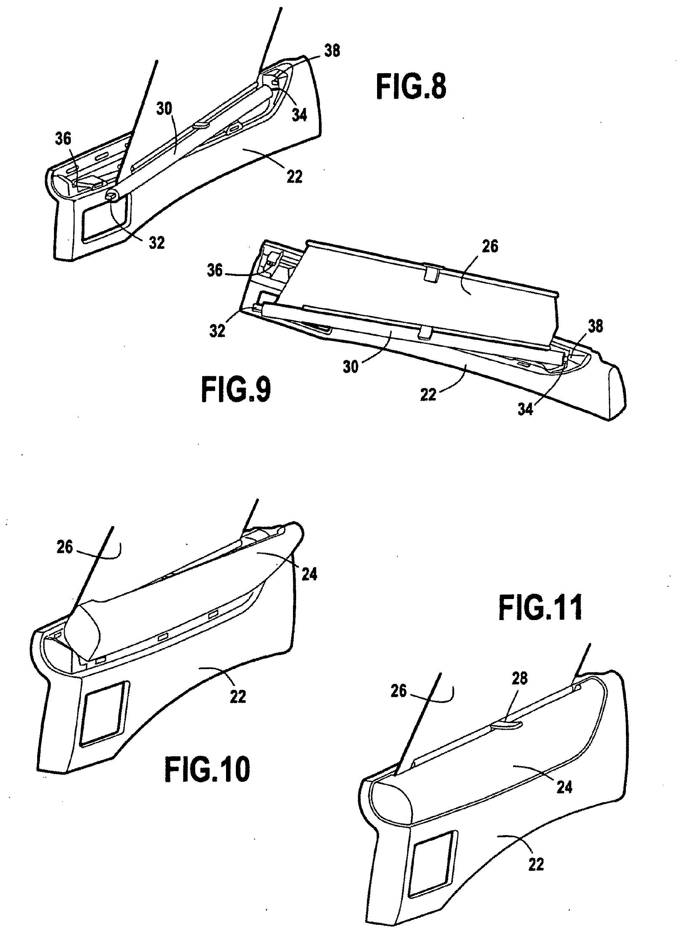

Dans le mode de réalisation représenté, le support de palier 38 formé dans le bandeau 22 délimite un logement de forme sensiblement rectangulaire allongée horizontalement, dans lequel pénètre une extrémité du rouleau 30 de la manière indiquée sur la figure 8, c'est-à-dire par déplacement suivant la longueur du rouleau 30. Le logement du support de palier 38 débouche donc en direction sensiblement horizontale dans le plan de la porte, suivant la longueur du bandeau 22.

Lorsque le palier 34 du rouleau 30 a été introduit dans le support de palier 38, un pivotement du rouleau 30 autour de ce support 38 rapproche le palier opposé 32 de son support 36. Le support de palier 36 forme un logement qui a une ouverture qui débouche en direction sensiblement perpendiculaire au plan de la porte. Le palier 32 pénètre dans ce logement dans lequel il est maintenu par une griffe élastique 37, représentée sur la figure 6.

Le montage qu'on vient de décrire peut être réalisé sur le bandeau alors qu'il est séparé de l'organe porteur, et le bandeau peut ensuite être fixé à l'organe porteur, par des vis 40 par exemple (figures 6 et 7).

Lorsque le rouleau de pare-soleil à ainsi été monté, le bord inférieur du couvercle 24 est fixé sur le bandeau 22, au bord avant de la cavité du bandeau comme indiqué sur la figure 10. Alors que la barre de maintien du bord d'extrémité du store et sa poignée 28 sont en dehors de la cavité du bandeau 22, le couvercle est incliné vers le bandeau, et le pare-soleil est enfermé dans le bandeau, seules la barre de maintien et sa poignée 28 étant en dehors du bandeau. Dans cette position, le couvercle 24 et le bandeau 22 délimitent une fente suffisamment étroite pour que l'organe de maintien 28 du store 26 ne puisse pas pénétrer à l'intérieur de l'espace délimité entre le bandeau 22 et le couvercle 24.

Dans un autre mode de réalisation, les supports de paliers 36 et 38 peuvent être réalisés dans l'organe porteur, et le bandeau peut être continu au niveau du couvercle afin qu'il vienne recouvrir le rouleau de pare-soleil porté par l'organe porteur.

Bien qu'on ait décrit un mode de réalisation dans lequel une extrémité du rouleau 30 est introduite dans son palier 34 par translation en direction de l'axe du rouleau, et l'autre extrémité du rouleau 30 est ensuite introduite dans son palier 32 en direction perpendiculaire à l'axe du rouleau, d'autres réalisations sont possibles. Par exemple, les deux supports de paliers peuvent être analogues au support 36, c'est-à-dire que les deux paliers peuvent être introduits dans leur logement en directions perpendiculaires à l'axe du rouleau 30.

Bien qu'on ait décrit un exemple dans lequel les deux supports de paliers sont portés par le même élément principal, l'organe porteur ou le bandeau, il est possible de disposer un support de palier sur l'un des éléments principaux et l'autre sur l'autre élément. Une telle réalisation doit être bien intégrée au processus de fabrication de la porte.

Bien qu'on ait utilisé le terme "perpendiculaire" pour définir les orientations respectives d'éléments du panneau de porte et du pare-soleil, ce terme ne désigne pas une orientation rigoureuse, mais se rapporte à toute direction transversale, c'est-à-dire qui peu s'écarter de plusieurs dizaines de degrés d'une orientation rigoureusement perpendiculaire (90°).

Ainsi, l'invention concerne l'intégration d'un pare-soleil à la porte elle-même, par utilisation des organes principaux de la porte, que sont l'organe porteur et le bandeau, sans élément supplémentaire. De cette manière, le coût de réalisation d'un panneau de porte muni d'un pare-soleil, bien qu'il soit supérieur à celui d'une porte sans pare-soleil, est nettement inférieur à celui d'un panneau de porte muni d'un pare-soleil en cassette ou intégré à un élément supplémentaire formant boîtier de pare-soleil.

## Revendications

1. Panneau de porte d'automobile, muni d' un pare-soleil ayant un store (26) enroulé autour d'un axe d'un rouleau (30) coopérant avec des paliers (32, 34) à ses deux extrémités, le panneau de porte étant du type qui comprend deux éléments principaux de support constitués par un organe porteur (20) et un bandeau (22), **caractérisé en ce que** les éléments principaux portent deux supports intégrés (36, 38) destinés à supporter les paliers (32, 34) du rouleau de pare-soleil, et l'un des supports intégrés au moins forme un logement qui ouvre dans une direction transversale à l'axe du rouleau.

2. Panneau de porte d'automobile selon la revendication 1, **caractérisé en ce que** les deux supports intégrés (36, 38) destinés à supporter les paliers (32, 34) du rouleau (30) de pare-soleil sont disposés sur le même élément principal.

3. Panneau de porte d'automobile selon la revendication 2, **caractérisé en ce que** les deux supports intégrés de paliers sont disposés sur l'organe porteur, et le bandeau ferme l'espace logeant le rouleau de pare-soleil.

4. Panneau de porte d'automobile selon la revendication 3, **caractérisé en ce que** le store de pare-soleil passe entre l'organe porteur et le bandeau.

5. Panneau de porte d'automobile selon la revendication 2, **caractérisé en ce que** les deux supports intégrés (36, 38) de paliers sont disposés sur le bandeau (22), et un couvercle (24) ferme l'espace logeant le rouleau (30) de pare-soleil.

6. Panneau de porte d'automobile selon la revendication 5, **caractérisé en ce que** le store (26) de pare-soleil passe entre le bandeau (22) et le couvercle (24).

7. Panneau de porte d'automobile selon l'une quelconque des revendications 2 à 6, **caractérisé en ce que** l'un des supports intégrés (36, 38) de paliers forme un logement ouvrant dans une direction disposée pratiquement dans le plan de la porte, et l'autre des supports intégrés (36, 38) forme un logement ouvrant en direction sensiblement perpendiculaire au plan de la porte.

8. Panneau de porte d'automobile selon l'une quelconque des revendications 2 à 6, **caractérisé en ce que** les deux supports intégrés (36, 38) de paliers forment des logements ouvrant dans des directions disposées pratiquement dans le plan de la porte, les deux directions étant sensiblement perpendiculaires l'une à l'autre.

9. Panneau de porte d'automobile selon l'une quelconque des revendications 2 à 6, **caractérisé en ce que** les deux supports intégrés (36, 38) de paliers forment des logements ouvrant en directions sensiblement perpendiculaires à la porte.

10. Porte d'automobile, comprenant un ouvrant structurel monté sur un dormant structurel intégré à la structure de l'automobile, l'ouvrant étant destiné à tourner par rapport au dormant et comprenant une partie inférieure de porte intégrant des dispositifs fonctionnels de la porte, et un panneau de porte rapporté à l'intérieur de la partie inférieure de porte, **caractérisée en ce que** le panneau de porte est un panneau selon l'une quelconque des revendications précédentes.

## Claims

1. Motor vehicle door panel provided with a sun visor with a blind (26) which is wound around an axis of a roller (30) which co-operates with bearings (32, 34) at its two ends, the door panel being of the type which comprises two main support elements which are constituted by a support unit (20) and a strip (22), **characterised in that** the main elements bear two integrated supports (36, 38) which are designed to support the bearings (32, 34) of the sun visor roller, and at least one of the integrated supports forms a receptacle which opens in a direction transverse to the axis of the roller.

2. Motor vehicle door panel according to claim 1, **characterised in that** the two integrated supports (36, 38) which are designed to support the bearings (32, 34) of the sun visor roller (30) are disposed on the same main element.

3. Motor vehicle door panel according to claim 2, **characterised in that** the two integrated bearing supports are disposed on the support unit, and the strip closes the space which accommodates the sun visor roller.

4. Motor vehicle door panel according to claim 3, **characterised in that** the sun visor blind passes between the support unit and the strip.

5. Motor vehicle door panel according to claim 2, **characterised in that** the two integrated bearing supports (36, 38) are disposed on the strip (22), and a cover (24) closes the space which accommodates the sun visor roller (30).

6. Motor vehicle door panel according to claim 5, **characterised in that** the sun visor blind (26) passes between the strip (22) and the cover (24).

7. Motor vehicle door panel according to any one of claims 2 to 6, **characterised in that** one of the integrated bearing supports (36, 38) forms a receptacle which opens in a direction which is disposed in practice on the plane of the door, and the other one of the integrated supports (36, 38) forms a receptacle which opens in a direction substantially perpendicular to the plane of the door.

8. Motor vehicle door panel according to any one of claims 2 to 6, **characterised in that** the two integrated bearing supports (36, 38) form receptacles which open in directions which are disposed in practice on the plane of the door, the two directions being substantially perpendicular to one another.

9. Motor vehicle door panel according to any one of claims 2 to 6, **characterised in that** the two integrated bearing supports (36, 38) form receptacles which open in directions which are substantially perpendicular to the door.

10. Motor vehicle door, comprising a structural leaf which is fitted on a structural frame integrated in the structure of the motor vehicle, the leaf being designed to turn relative to the frame and comprising a lower door part which incorporates functional devices of the door, and a door panel which is added on inside the lower part of the door, **characterised in that** the door panel is a panel according to any one of the preceding claims.

## Patentansprüche

1. Kraftfahrzeug-Türplatte mit einem Sonnenschutz, ein Rollo (26) aufweisend, das um eine Achse einer Walze (30) aufgerollt ist, die an ihren beiden Enden mit Lagern (32, 34) zusammenarbeiten, wobei die Türplatte der Art ist, die zwei Haupttrageteile umfasst, die aus einem Halteorgan (20) bestehen und einem Band (22), **dadurch gekennzeichnet, dass** die Hauptteile zwei eingebaute Halterungen (36, 38) tragen, dazu bestimmt, die Lager (32, 34) der Sonnenschutzwalze zu halten, und dass mindestens eine der eingebauten Halterungen eine Aufnahme bildet, die sich in einer Richtung quer zur Achse der Walze öffnet.

2. Kraftfahrzeug-Türplatte nach Patentanspruch 1, **dadurch gekennzeichnet, dass** die beiden eingebauten Halterungen (36, 38), die dazu dienen, die Lager (32, 34) der Walze (30) des Sonnenschutzes zu halten, auf demselben Hauptteil angeordnet sind.

3. Kraftfahrzeug-Türplatte nach Patentanspruch 2, **dadurch gekennzeichnet, dass** die beiden eingebauten Lagerhalterungen auf dem Halteorgan angeordnet sind und das Band den Raum schließt, der die Sonnenschutzwalze (30) aufnimmt.

4. Kraftfahrzeug-Türplatte nach Patentanspruch 3, **dadurch gekennzeichnet, dass** das Sonnenschutzrollo zwischen dem Tragorgan und dem Band hindurchläuft.

5. Kraftfahrzeug-Türplatte nach Patentanspruch 2, **dadurch gekennzeichnet, dass** die beiden eingebauten Lagerhalterungen (36, 38) auf dem Band (22) angeordnet sind und ein Deckel (24) den Raum schließt, der die Sonnenschutzwalze (30) aufnimmt.

6. Kraftfahrzeug-Türplatte nach Patentanspruch 5, **dadurch gekennzeichnet, dass** das Sonnenschutzrollo (26) zwischen dem Band (22) und dem Deckel (24) hindurchläuft.

7. Kraftfahrzeug-Türplatte nach irgendeinem der Patentansprüche 2 bis 6,
**dadurch gekennzeichnet, dass** eine der eingebauten Lagerhalterungen (36, 38) eine Aufnahme bildet, die sich in eine Richtung öffnet, die praktisch in der Türebene liegt und die andere der eingebauten Halterungen (36, 38) eine Aufnahme bildet, die sich in eine Richtung im wesentlichen senkrecht zur Türebene öffnet.

8. Kraftfahrzeug-Türplatte nach irgendeinem der Patentansprüche 2 bis 6, **dadurch gekennzeichnet, dass** die beiden eingebauten Lagerhalterungen (36, 38) Aufnahmen bilden, die sich in Richtungen öffnen, die praktisch in der Türebene liegen, wobei die beiden Richtungen im wesentlichen senkrecht aufeinander stehen.

9. Kraftfahrzeug-Türplatte nach irgendeinem der Patentansprüche 2 bis 6, **dadurch gekennzeichnet, dass** die beiden eingebauten Lagerhalterungen (36, 38) Aufnahmen bilden, die sich in Richtungen im wesentlichen senkrecht zur Tür öffnen.

10. Kraftfahrzeugtür, ein Türfüllungschassis aufweisend, das in einem Türrahmenchassis montiert ist, das Bestandteil der Karosserie des Kraftfahrzeugs ist, wobei die Türfüllung dafür bestimmt ist, sich relativ zum Rahmen zu drehen und einen unteren Türteil aufweist, in den Funktionsvorrichtungen der Tür eingebaut sind, und eine Türplatte, die an das Innere des unteren Türteils angesetzt ist, **dadurch gekennzeichnet**, das die Türplatte eine Platte nach irgendeinem der vorangehenden Patentansprüche ist.
